# DEMANDE DE BREVET EUROPEEN

(11) **EP 2 081 383 A2**
(43) Date de publication de la demande: **22.07.2009**
(21) Numéro de dépôt: 08172879.2
(22) Date de dépôt: 24.12.2008
(51) Int. Cl.: H04N 7/173

(54) **Procédé de préparation de contenus de programmes audiovisuels, et système associé**

(30) Priorité: 21.01.2008 FR 0800282
(71) Demandeur: Alcatel Lucent, 75008 Paris (FR)
(72) Inventeur: Baynaud, Erwan, 91620 NOZAY (FR); Delegue, Gérard, 91620 NOZAY (FR); Martinot, Olivier, 91620 NOZAY (FR)
(74) Mandataire: Korakis-Ménager, Sophie

(57) **Abrégé**

La présente invention a pour objet un procédé de préparation de contenus de programmes audiovisuels.

Selon l'invention, le procédé comprend les étapes suivantes :
- on sélectionne un groupement d'utilisateurs (5),
- on sélectionne dans un flux choisi de contenus de programmes audiovisuels des séquences en les identifiant avec des marqueurs,
- on extrait les séquences à l'aide des marqueurs du flux choisi de contenus de programmes audiovisuels,
- on enregistre les séquences extraites dans une base de données (9) accessible aux utilisateurs dudit groupement (5).

## Description

La présente invention concerne un procédé de préparation de contenus de programmes audiovisuels. Elle concerne également un système de préparation de contenus de programmes audiovisuels, un terminal et un serveur pour la mise en oeuvre d'un tel procédé.

Actuellement dans l'audiovisuel, les utilisateurs peuvent choisir parmi de nombreux flux de contenus de programmes audiovisuels à regarder sur des terminaux comme des téléviseurs, des ordinateurs ou des téléphones portables.

La multiplication des chaînes et services a pour effet d'offrir à l'utilisateur un choix de plus en plus important.

Afin de permettre à l'utilisateur d'effectuer son choix parmi les chaînes ou services qui lui sont proposés, il peut par exemple avoir à sa disposition un guide de services électronique, en anglais electronic service guide ou ESG.

Toutefois, parmi tous ces choix possibles, l'utilisateur n'a pas la possibilité de sélectionner une séquence particulière dans un flux donné, ni de la partager avec d'autres utilisateurs.

La présente invention vise donc à proposer un procédé permettant à un utilisateur de partager ses préférences.

A cet effet, l'invention a pour objet un procédé de préparation de contenus de programmes audiovisuels **caractérisé en ce qu**'il comprend les étapes suivantes :
- on sélectionne un groupement d'utilisateurs,
- on sélectionne dans un flux choisi de contenus de programmes audiovisuels des séquences en les identifiant avec des marqueurs,
- on extrait les séquences à l'aide des marqueurs du flux choisi de contenus de programmes audiovisuels,
- on enregistre les séquences extraites dans une base de données accessible aux utilisateurs dudit groupement de manière à permettre aux utilisateurs dudit groupement d'évaluer lesdites séquences enregistrées à partir de ladite base de données.

Ainsi, chaque utilisateur peut de façon simple et aisée appartenir à un groupement, sélectionner des séquences audiovisuelles toutes chaînes confondues et les partager avec les autres utilisateurs du groupement afin de leur faire bénéficier des meilleurs moments comme les plus navrants ou encore les plus émouvants, et ainsi parfois découvrir certaines émissions à travers les séquences sélectionnées par les utilisateurs.

Selon un mode de réalisation préféré, le procédé de préparation de contenus de programmes audiovisuels comporte une étape de comparaison des marqueurs identifiant les séquences sélectionnées à extraire avec les marqueurs de séquences extraites enregistrées dans la base de données, afin de déterminer si les séquences sélectionnées ont déjà été extraites et dans ce cas ne pas les extraire à nouveau.

De façon avantageuse, un paramètre de préférence est associé à au moins une séquence extraite enregistrée dans la base de données.

Préférentiellement, le paramètre de préférence est calculé à partir de paramètres individuels de préférence émis par des utilisateurs dudit groupement.

Avantageusement le procédé de préparation de contenus de programmes audiovisuels comprend une étape dans laquelle on sélectionne les séquences ayant le paramètre de préférence le plus élevé pour créer un contenu regroupant ces séquences préférentielles des utilisateurs dudit groupement.

De façon préférée, les contenus regroupant les séquences préférentielles des utilisateurs dudit groupement sont enregistrés dans une base de données accessible aux utilisateurs dudit groupement.

Selon une alternative avantageuse le procédé de préparation de contenus de programmes audiovisuels comprend une étape dans laquelle on ajoute aux contenus de programmes audiovisuels des informations d'identification et descriptives.

Selon un mode de réalisation préféré lorsqu'au moins une séquence est sélectionnée à l'instant t, cette séquence est extraite à partir d'un instant prédéfini en aval de l'instant t, et jusqu'à un instant prédéfini en amont de l'instant t.

Selon un autre mode de réalisation préféré l'étape d'extraction des séquences comporte une détection de coupures des séquences.

L'invention a également pour objet un système de préparation de contenus de programmes audiovisuels pour la mise en oeuvre d'un procédé tel que décrit précédemment, **caractérisé en ce qu**'il comporte :
- au moins un terminal comprenant :
   - des moyens de sélection d'un groupement d'utilisateurs, et
   - des moyens de sélection dans un flux choisi de contenus de programmes audiovisuels des séquences en les identifiant avec des marqueurs,
- et un serveur comprenant :
   - des moyens d'extraction des séquences à l'aide des marqueurs du flux choisi de contenus de programmes audiovisuels, et
   - des moyens d'enregistrement des séquences extraites dans une base de données accessible aux utilisateurs dudit groupement.

L'invention a encore pour objet un terminal pour un système de préparation de contenus de programmes audiovisuels tel que mentionné précédemment **caractérisé en ce qu**'il comporte :
- des moyens de sélection d'un groupement d'utilisateurs, et
- des moyens de sélection dans un flux choisi de contenus de programmes audiovisuels des séquences en les identifiant avec des marqueurs destinés à être envoyés à un serveur du système de préparation de contenus de programmes audiovisuels tel que décrit précédemment.

Enfin, l'invention a également pour objet un serveur pour un système de préparation de contenus de programmes audiovisuels tel que mentionné précédemment, **caractérisé en ce qu**'il comporte :
- des moyens d'extraction des séquences du flux choisi de contenus de programmes audiovisuels à l'aide de marqueurs envoyés par un terminal du système de préparation de contenus de programmes audiovisuels tel que décrit précédemment, et
- des moyens d'enregistrement des séquences extraites dans une base de données accessible aux utilisateurs d'un groupement sélectionné à partir d'un terminal du système de préparation de contenus de programmes audiovisuels tel que décrit précédemment.

D'autres caractéristiques et avantages de l'invention ressortiront de la description suivante, donnée à titre d'exemple, sans caractère limitatif, en regard des dessins annexés sur lesquels :
- la figure 1 illustre schématiquement la structure générale d'un système de préparation de contenus de programmes audiovisuels selon l'invention,
- la figure 2 représente les étapes successives d'un procédé de préparation de contenus de programmes audiovisuels selon l'invention en liaison avec les structures du système de préparation de la figure 1 réalisant ces étapes,
- la figure 3 représente les étapes successives de manière séquentielle d'un procédé de préparation de contenus de programmes audiovisuels selon l'invention,
- la figure 4 représente l'étape d'extraction de séquence selon un premier mode de réalisation,
- la figure 5 représente l'étape d'extraction de séquence selon un deuxième mode de réalisation.

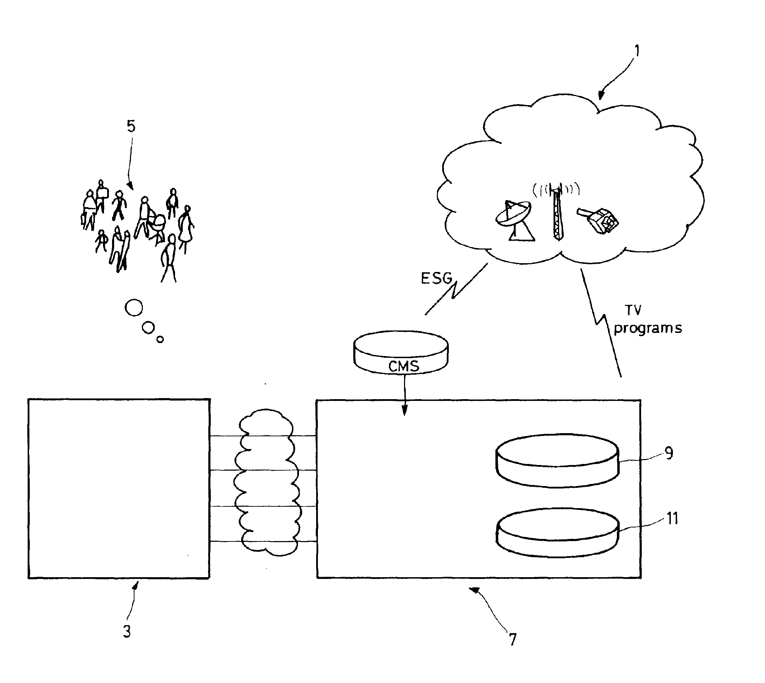

Sur la figure 1 est représenté un réseau de télévision 1 qui émet des programmes audiovisuels et met à disposition des utilisateurs un guide de services électronique (en anglais ESG) permettant aux utilisateurs de naviguer pour connaître par exemple les différents programmes prévus sur différentes chaînes en fonction de l'heure, du genre, etc., ainsi qu'un système de gestion de contenu, en anglais Content Management Systems ou CMS.

Ce réseau de télévision 1 est relié à un système de préparation de contenus de programmes audiovisuels pour la mise en oeuvre du procédé de préparation de contenus de programmes audiovisuels selon l'invention.

Ce système de préparation de contenus de programmes audiovisuels comprend un terminal 3 d'accès aux contenus de programmes audiovisuels émis par le réseau de télévision 1. Ce terminal d'accès peut être par exemple un téléviseur, un ordinateur, un téléphone portable, ou encore un assistant numérique personnel PDA.

Un utilisateur du terminal 3 peut appartenir à un ou plusieurs groupements d'utilisateurs tels que « famille », « amis ». Ces groupements d'utilisateurs sont sensiblement proches des communautés sur Internet par exemple. Pour cela, le terminal 3 comporte des moyens de sélection d'un groupement d'utilisateurs 5.

Un ou plusieurs utilisateurs du groupement 5 sont également administrateurs. Cette fonction est sensiblement proche de celle des modérateurs pour les forums de discussion sur Internet, à savoir de contrôler et modérer tout échange au sein du groupement.

Le système de préparation de contenus de programmes audiovisuels comporte en outre un serveur 7 relié d'une part au réseau de télévision 1 et d'autre part au terminal 3.

Afin de permettre à l'utilisateur du système de préparation de contenus de programmes audiovisuels de sélectionner une séquence qu'il juge intéressante en visionnant un programme donné c'est à dire dans un flux choisi de contenus de programmes audiovisuels, le terminal 3 comporte des moyens de sélection de séquences en les identifiant avec des marqueurs destinés à être envoyés au serveur 7.

Le serveur 7 comporte quant à lui des moyens d'enregistrement du programme visionné par l'utilisateur, par exemple à l'aide d'une mémoire circulaire. Le contenu reste enregistré pour une durée supérieure ou égale à une durée d1 prédéterminée. Le serveur 7 comporte également des moyens d'extraction des séquences identifiées à l'aide des marqueurs envoyés par le terminal 3, de manière à pouvoir extraire les séquences identifiées à partir de l'enregistrement du programme visionné.

Selon un mode de réalisation particulier, les moyens d'extraction du serveur 7 comprennent des moyens d'analyse du temps de manière à permettre l'extraction d'une séquence sélectionnée à un instant t, à partir d'un instant t-d1, et jusqu'à un instant t+d2.

Ces instants t-d1 et t+d2 sont déterminés par des délais fixes d1 et d2 à laisser avant et après l'instant t.

Selon un autre mode de réalisation particulier, les moyens d'extraction du serveur 7 comprennent des moyens de détection de coupures de séquences. Ainsi, lorsque l'utilisateur sélectionne la séquence à un instant t, les moyens de détection de coupures de séquences sont aptes à détecter sur l'enregistrement du programme visionné le début et la fin de la séquence, ceci permet alors l'extraction de la séquence sélectionnée.

Toutefois, après extraction selon l'un ou l'autre mode de réalisation la séquence peut être ajustée soit au niveau du serveur, soit par l'utilisateur.

Le serveur 7 comporte en outre des moyens d'enregistrement des séquences extraites dans une base de données 9 accessible aux utilisateurs du groupement 5 permettant ainsi aux utilisateurs du groupement 5 de partager et visionner les séquences enregistrées.

Toutefois, pour éviter d'extraire plusieurs fois une même séquence, le serveur 7 comporte des moyens de comparaison des marqueurs identifiant les séquences à extraire sélectionnées par l'utilisateur avec les marqueurs des séquences extraites enregistrées dans la base de données 9.

Une fois les séquences sélectionnées par les utilisateurs enregistrées dans la base de données 9, il est possible pour les utilisateurs d'évaluer ces séquences enregistrées individuellement et collectivement.

Pour cela, le terminal 3 comporte des moyens d'attribution de paramètres individuels de préférence aux séquences enregistrées dans la base de données 9, permettant à chaque utilisateur du groupement 5 d'évaluer de façon individuelle les séquences qu'il a visionné.

Le serveur 7 comporte également des moyens d'attribution de paramètres de préférences permettant de donner une évaluation représentative de l'ensemble du groupement 5 sur les séquences enregistrées dans la base de données 9.

Selon un mode de réalisation, ces moyens d'attribution comprennent des moyens de calcul permettant d'établir une moyenne des différents paramètres individuels émis par les utilisateurs du groupement 5.

Avantageusement, le serveur 7 comprend :
- des moyens de comparaison des paramètres de préférences attribués aux séquences enregistrées dans la base de données 9,
- des moyens de sélection des séquences au paramètre de préférence le plus élevé, et
- des moyens de création d'un contenu regroupant ces séquences préférentielles des utilisateurs du groupement 5.

Le contenu ainsi créé est représentatif du groupement 5.

Le serveur 7 comprend aussi des moyens d'enregistrement des contenus regroupant les séquences préférentielles des utilisateurs du groupement 5 dans une base de données 11 accessible aux utilisateurs du groupement 5.

Lorsque ces contenus regroupant les séquences préférentielles des utilisateurs sont enregistrés dans la base de données 11, les utilisateurs peuvent évaluer ces contenus de manière similaire à l'évaluation des séquences enregistrées dans la base de données 9.

Pour ce faire, le terminal 3 comporte des moyens d'attribution de paramètres individuels de préférence aux contenus enregistrés dans la base de données 11.

De même, le serveur 7 comporte des moyens d'attribution de paramètres de préférences permettant de donner une évaluation représentative de l'ensemble du groupement 5 sur les contenus enregistrés dans la base de données 11.

Préférentiellement, le serveur 7 comprend en outre des moyens d'analyse des paramètres de préférences attribués aux séquences enregistrées dans la base de données 9, et aux contenus enregistrés dans la base de données 11, afin d'effectuer un classement des meilleurs séquences et contenus du groupement 5 ainsi que de tous les groupements d'utilisateurs, et ainsi primer les utilisateurs et les groupements sélectionnant les meilleures séquences. Chaque utilisateur peut connaître les séquences, contenus, utilisateurs et groupements ayant été récompensés.

De façon préférée, le serveur 7 comprend des moyens d'ajout d'informations servant à identifier et décrire les contenus de programmes audiovisuels. Ces informations sont par exemple des métadonnées, en anglais « metadata ».

Plus précisément, les contenus comportent des balises tel que début ou fin de fichier, ou encore d'identification. Ces balises ont pour effet d'améliorer la recherche d'information, par exemple pour l'extraction d'une séquence, et sont contenues au préalable dans le système de gestion de contenus (CMS) fourni par le guide de services électronique (ESG).

Lors de l'extraction des séquences, les métadonnées des contenus de programmes audiovisuels sont associées aux séquences extraites.

De plus, les séquences comportent des informations relatives à la chaîne de diffusion du programme audiovisuel dont elles sont extraites.

Enfin, le serveur 7 comprend de façon avantageuse, des moyens de contrôle sur les séquences et contenus pour le respect des bonnes moeurs et pour les aspects juridiques. Ces moyens de contrôle sont utilisés par les administrateurs du groupement 5 et également par les fournisseurs de service.

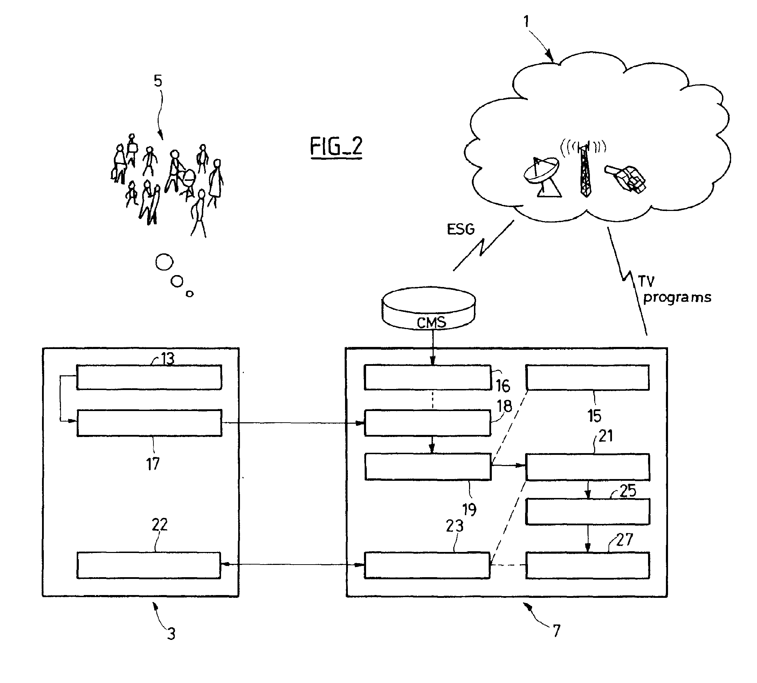

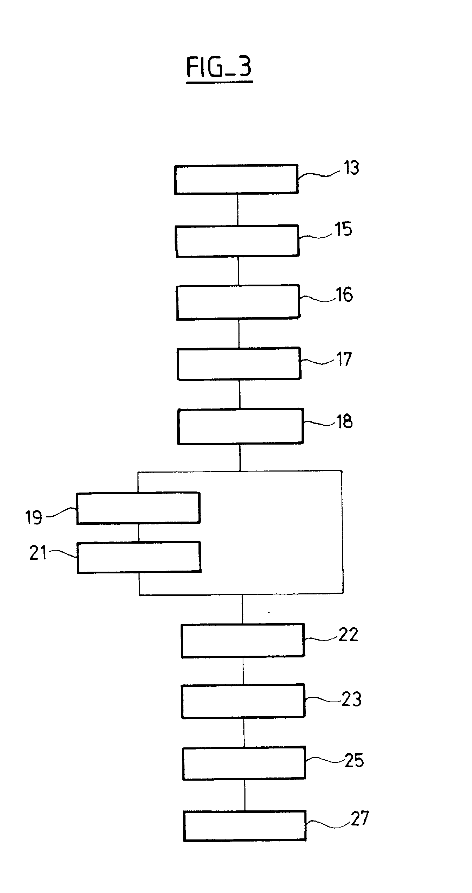

Comme l'illustre les figures 2 et 3, le procédé de préparation de contenus de programmes audiovisuels comprend plusieurs étapes que nous détaillons dans la suite de la description.

Au cours d'une première étape 13 l'utilisateur sélectionne un ou plusieurs groupements d'utilisateurs 5 à partir du terminal 3.

Lorsque l'utilisateur décide de visionner un programme de télévision, il sélectionne en fait un flux de contenus de programmes audiovisuels, le serveur 7 enregistre le programme visionné par exemple à l'aide d'une mémoire circulaire lors d'une étape 15. Le contenu reste enregistré pour une durée supérieure ou égale à la durée d1.

Si en visionnant ce programme une ou plusieurs séquences particulières intéresse l'utilisateur il sélectionne alors ces séquences en les identifiant avec des marqueurs, c'est l'étape 17.

À la suite de cette étape 17, on extrait les séquences à l'aide des marqueurs lors d'une étape 19, puis on enregistre au cours d'une étape 21 les séquences extraites dans la base de données 9 accessible aux utilisateurs du groupement 5.

L'utilisateur peut ainsi directement en regardant un programme audiovisuel, sélectionner une séquence qu'il souhaite extraire, et cette séquence une fois enregistrée, peut alors être partagée de façon simple et aisée avec tous les autres utilisateurs appartenant au groupement 5.

Avantageusement, le procédé de préparation de contenus de programmes audiovisuels comporte une étape de comparaison 18 des marqueurs identifiant les séquences sélectionnées à extraire avec les marqueurs de séquences extraites enregistrées dans la base de données 9, afin de déterminer si les séquences sélectionnées ont déjà été extraites et dans ce cas ne pas les extraire à nouveau.

La base de données 9 ne se retrouve pas encombrée inutilement, ce qui simplifie également la gestion de cette base de données 9.

Selon le mode de réalisation décrit, le procédé de préparation de contenus de programmes audiovisuels comprend une étape 23 dans laquelle le serveur 7 associe un paramètre de préférence à au moins une séquence extraite enregistrée dans la base de données 9. Le procédé permet donc une évaluation des différentes séquences extraites enregistrées dans la base de données 9.

Préférentiellement, le paramètre de préférence est calculé à partir de paramètres individuels de préférence émis par des utilisateurs du groupement 5 lors d'une étape 22. Le paramètre de préférence est donc bien représentatif de l'ensemble des utilisateurs du groupement 5.

Suite à l'étape 23, le procédé de préparation de contenus de programmes audiovisuels comprend de façon avantageuse une étape 25 dans laquelle le serveur 7 sélectionne les séquences ayant le paramètre de préférence le plus élevé pour créer un contenu regroupant ces séquences préférentielles des utilisateurs du groupement 5.

Un « Best-of » à savoir un regroupement des meilleurs moments de programmes audiovisuels selon les utilisateurs du groupement 5 est créé de façon simple et est adapté aux utilisateurs du groupement 5.

Un tel contenu pourra durer environ trois minutes avec des séquences d'environ 15 secondes chacune.

Les contenus regroupant les séquences préférentielles des utilisateurs du groupement 5 sont alors enregistrés dans la base de données 11 accessible aux utilisateurs du groupement 5, lors d'une étape 27.

Chaque utilisateur du groupement 5 peut ainsi avoir accès de façon illimitée à ces contenus de manière similaire à l'accès aux séquences enregistrées dans la base de données 9.

De façon préférée, le procédé de préparation de contenus de programmes audiovisuels comprend une étape 16 dans laquelle on ajoute aux contenus de programmes audiovisuels des informations d'identification et descriptives : métadonnées dites « metadata » en anglais. Ces métadonnées sont associées aux séquences lors de l'étape 19 d'extraction de séquences.

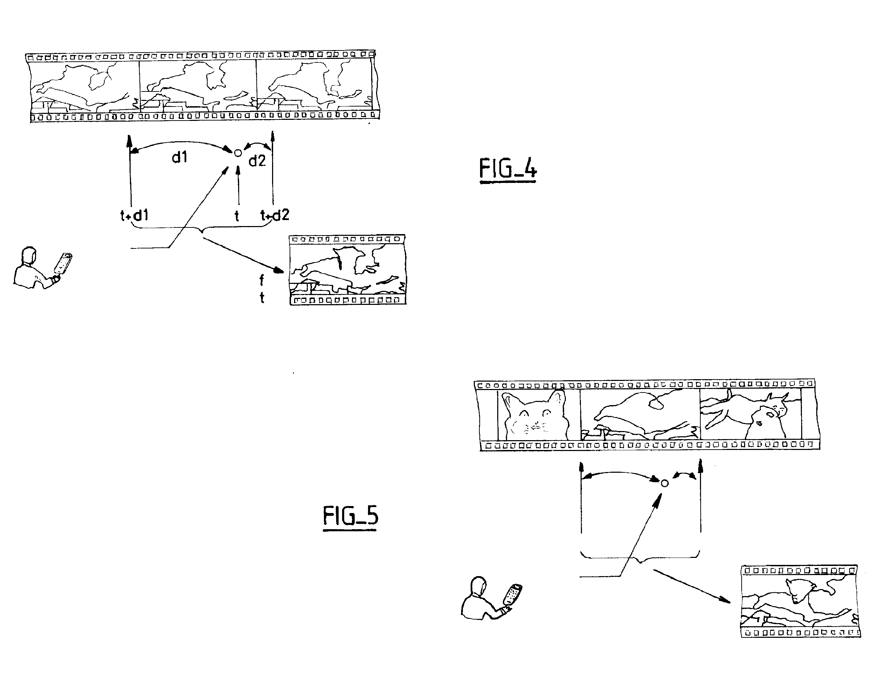

Comme l'illustre la figure 4, l'étape 19 d'extraction des séquences est selon un mode de réalisation particulier basée sur le temps. Lorsqu'une séquence est sélectionnée par l'utilisateur à l'instant t, deux délais fixes d1 et d2 sont pris respectivement avant et après l'instant t pour la séquence sélectionnée.

La séquence est alors extraite à partir d'un instant t-d1 en aval de l'instant t, et jusqu'à un instant t+d2 en amont de l'instant t. Ces deux instants t-d1 et t+d2 étant déterminés par les délais fixes d1 et d2. La séquence normale est alors prête à être enregistrée dans la base de données 9.

Selon un autre mode de réalisation représenté sur la figure 5, l'étape 19 d'extraction des séquences est basée sur une détection de coupures des séquences. Lorsqu'une séquence est sélectionnée par l'utilisateur à l'instant t, sur l'enregistrement fait du programme visionné, les moyens de détection du serveur 7 détectent le début ainsi que la fin de la séquence sélectionnée. Il s'en suit alors l'extraction de la séquence complète pour l'enregistrement dans la base de données 9.

Ainsi avec un tel procédé de préparation de contenus de programmes audiovisuels, des particuliers peuvent être membres d'un groupement d'utilisateurs et, partager et évaluer des séquences qu'ils ont eux-mêmes sélectionner directement en visionnant un programme audiovisuel, et créer des contenus « best-of » à partir de leurs évaluations qui leur sont adaptés et représentatifs, et peuvent à nouveau évaluer ces contenus « best-of » pour établir des récompenses. Toutes les étapes du procédé de préparation de contenus de programmes audiovisuels sont automatiques et ne nécessitent aucune application compliquée.

## Revendications

1. Procédé de préparation de contenus de programmes audiovisuels **caractérisé en ce qu'**il comprend les étapes suivantes :
- on sélectionne un groupement d'utilisateurs (5),
- on sélectionne dans un flux choisi de contenus de programmes audiovisuels des séquences en les identifiant avec des marqueurs,
- on extrait les séquences à l'aide des marqueurs du flux choisi de contenus de programmes audiovisuels,
- on enregistre les séquences extraites dans une base de données (9) accessible aux utilisateurs dudit groupement (5) de manière à permettre aux utilisateurs dudit groupement d'évaluer lesdites séquences enregistrées à partir de ladite base de données (9).

2. Procédé de préparation de contenus de programmes audiovisuels selon la revendication 1, **caractérisé en ce qu'**il comporte une étape (18) de comparaison des marqueurs identifiant les séquences sélectionnées à extraire avec les marqueurs de séquences extraites enregistrées dans la base de données (9), afin de déterminer si les séquences sélectionnées ont déjà été extraites et dans ce cas ne pas les extraire à nouveau.

3. Procédé de préparation de contenus de programmes audiovisuels selon l'une quelconque des revendications 1 ou 2, **caractérisé en ce qu'**un paramètre de préférence est associé à au moins une séquence extraite enregistrée dans la base de données (9).

4. Procédé de préparation de contenus de programmes audiovisuels selon la revendication 3, **caractérisé en ce que** le paramètre de préférence est calculé à partir de paramètres individuels de préférence émis par des utilisateurs dudit groupement (5).

5. Procédé de préparation de contenus de programmes audiovisuels selon la revendication 4, **caractérisé en ce qu'**il comprend une étape (25) dans laquelle on sélectionne les séquences ayant le paramètre de préférence le plus élevé pour créer un contenu regroupant ces séquences préférentielles des utilisateurs dudit groupement (5).

6. Procédé de préparation de contenus de programmes audiovisuels selon la revendication 5, **caractérisé en ce que** les contenus regroupant les séquences préférentielles des utilisateurs dudit groupement (5) sont enregistrés dans une base de données (11) accessible aux utilisateurs dudit groupement (5).

7. Procédé de préparation de contenus de programmes audiovisuels selon l'une des revendications 5 ou 6, **caractérisé en ce qu'**il comprend une étape (16) dans laquelle on ajoute aux contenus de programmes audiovisuels des informations d'identification et descriptives.

8. Procédé de préparation de contenus de programmes audiovisuels selon l'une quelconque des revendications 1 à 7, **caractérisé en ce que** lorsqu'au moins une séquence est sélectionnée à l'instant t, cette séquence est extraite à partir d'un instant (t-d1) prédéfini en aval de l'instant t, et jusqu'à un instant (t+d2) prédéfini en amont de l'instant t.

9. Procédé de préparation de contenus de programmes audiovisuels selon l'une quelconque des revendications 1 à 7, **caractérisé en ce que** l'étape d'extraction des séquences comporte une détection de coupures des séquences.

10. Système de préparation de contenus de programmes audiovisuels pour la mise en oeuvre d'un procédé selon l'une quelconque des revendications 1 à 9, **caractérisé en ce qu'**il comporte :
- au moins un terminal (3) comprenant :
- des moyens de sélection d'un groupement d'utilisateurs (5),
- des moyens de sélection dans dans un flux choisi de contenus de programmes audiovisuels des séquences en les identifiant avec des marqueurs, et
- des moyens pour évaluer des séquences enregistrées dans une base de données (9) accessible aux utilisateurs dudit groupement (5) ;
- et un serveur (7) comprenant :
- des moyens d'extraction des séquences à l'aide des marqueurs du flux choisi de contenus de programmes audiovisuels, et
- des moyens d'enregistrement des séquences extraites dans une base de données (9) accessible aux utilisateurs dudit groupement (5).

11. Terminal pour un système de préparation de contenus de programmes audiovisuels selon la revendication 10, **caractérisé en ce qu'**il comporte :
- des moyens de sélection d'un groupement d'utilisateurs (5),
- des moyens de sélection dans un flux choisi de contenus de programmes audiovisuels des séquences en les identifiant avec des marqueurs destinés à être envoyés à un serveur (7) du système de préparation de contenus de programmes audiovisuels selon la revendication 10 et
- des moyens pour évaluer des séquences enregistrées dans une base de données (9) accessible aux utilisateurs dudit groupement (5).

12. Serveur pour un système de préparation de contenus de programmes audiovisuels selon la revendication 10, **caractérisé en ce qu'**il comporte :
- des moyens d'extraction des séquences du flux choisi de contenus de programmes audiovisuels à l'aide de marqueurs envoyés par un terminal (3) du système de préparation de contenus de programmes audiovisuels selon la revendication 10, et
- des moyens d'enregistrement des séquences extraites dans une base de données accessible aux utilisateurs d'un groupement (5) sélectionné à partir du terminal (3) du système de préparation de contenus de programmes audiovisuels selon la revendication 10.
